# EUROPEAN PATENT APPLICATION

(11) **EP 4 484 900 A1**
(43) Date of publication of application: **01.01.2025**
(21) Application number: 24172715.5
(22) Date of filing: 26.04.2024
(51) Int. Cl.: G01D 11/30

(54) **THERMALLY ISOLATED SENSOR MOUNT FOR CRYOGENIC OR HIGH TEMPERATURE APPLICATIONS**

(30) Priority: 30.06.2023 US 202318345282
(71) Applicant: The Boeing Company, Arlington, VA 22202 (US)
(72) Inventor: IFRIM, Alin, Arlington, 22202 (US)
(74) Representative: Carrie, Rosemary Louise Hunter

(57) **Abstract**

A thermally-isolated sensor mounting structure, including at least two, nested, interlocking segments, including a lower segment and an upper segment attached to the lower segment, with one or more gaps between the upper and lower segments. The upper segment comprises a passageway for holding a sensor probe. The sensor mount can be a prismatic assembly that uses dovetail joints, or a threaded cylindrical assembly that is screwed together. The sensor mount can be attached to a substrate that is extremely cold or hot. Gap thermal resistance between the upper and lower segments plus optional optical coatings isolates the sensor probe from extreme temperatures. Mating surfaces can be artificially roughened or polished to increase the gap thermal resistance. The sensor probe can be screwed into the sensor mount. A total of four (or more) interlocking segments provides sufficient thermal isolation from a cryogenic substrate to prevent ice buildup on the sensor.

## Description

### STATEMENT OF GOVERNMENT INTEREST

The invention described herein was made in the performance of work under NASA contract No. 80MSFC20C0052 and is subject to the provisions of Section 305 of the National Aeronautics and Space Act of 1958 (72 Stat. 435: 42 U.S.C. 2457).

### INTRODUCTION

Sensors are used extensively in a wide variety of automotive, aviation, and aerospace applications, for example, automobile engines, airplanes, jet engines, spacecraft, and satellites, which are exposed to extreme cold and/or extreme hot environments. In particular, sensors mounted on liquid hydrogen/oxygen fuel tanks of spacecraft must be able to withstand cryogenic temperatures (e.g., -300 F) and still function properly. Sensors, such as temperature sensors, pressure sensors, optical sensors, and/or flow sensors, can be covered over with ice due to the cryogenic temperatures of the liquid hydrogen/oxygen fuel tanks (particularly in humid conditions) if the sensor is not thermally isolated from the cryogenic fuel tank substrate by using a high thermal-resistance structural mount. When encased in ice, the sensor can malfunction.

### SUMMARY

A thermally-isolated sensor mount is disclosed herein that is rugged, compact, and has a very high degree of thermal isolation (i.e., high thermal resistance) from an extremely hot or cold substrate. This allows proper operation of a mounted sensor in extreme temperature conditions. The thermally-isolated sensor mount includes multiple, interlocking segments acting together to increase thermal isolation for all types of sensors from extreme heat or cold. Natural gaps between the interlocking layers due to microscopic surface waviness and asperities increase the thermal resistance between adjoining surfaces. This is known as "gap thermal resistance." Various combinations of surface roughness and tightness of fit or pressure (such as ANSI fit class RC1-9) and external surface emissivity coatings can be determined by analysis and testing, according to the state of the art. A serial series of gap resistances enable a very small, compact, and rugged mount to protect sensors from damage due to extremely cold substrates and ice buildup, or from extremely hot substrates. Varying the materials, number of segments, size of the stack, smoothness/roughness of the interface surfaces, gap thickness, surface radiation properties of external surfaces, etc. can all be used to modify the thermal profile to attain a desired sensor operating temperature. Although specific examples are provided herein, nearly infinite configurations are possible. Disclosed examples include a prismatic version and a cylindrical version.

Prismatic Version: In some examples, the sensor mount is made of multiple, interlocking, prismatic segments with dovetail joints that slide together to make a prismatic (e.g., cubic) assembly to which the sensor probe is attached. The natural gaps between each section increase the total thermal resistance of the sensor mount. The series of interlocking gaps protect the sensor from, for example, freezing from extreme cold of the cryogenic fuel tanks.

Cylindrical Version: In some examples, the sensor mount is made of interlocking, threaded, cylindrical segments that screw into each other to make a compact, cylindrical assembly to which the sensor is attached. The natural gaps between the screw threads increase the gap thermal resistance and increases the total thermal resistance of the sensor mount, which protects the sensor from, for example, freezing from the extreme cold of cryogenic fuel tanks.

The proposed solutions have broad applicability to various applications for vehicles, aircraft, spacecraft, jet engines, furnaces, ovens, industrial operations, integrated circuits, capacitors, and sensors, etc.

In some examples, a thermally-isolated sensor mounting structure includes at least two, nested, interlocking segments, including at least a lower segment and an upper segment attached to the lower segment with an interlocking joint, with one or more gaps between the upper and lower segments. The upper segment comprises a passageway for holding a sensor probe. The sensor mount includes: (1) a prismatic assembly of multiple prismatic segments that slide together using dovetail joints; or (2) a threaded, cylindrical assembly of multiple cylindrical segments that are screwed together. The sensor mount is attached to a substrate that is extremely cold or extremely hot. The gap thermal resistance between the upper and lower segments isolates the sensor probe from the extreme environment. Mating surfaces can be artificially roughened to increase the gap thermal resistance. The sensor probe can be screwed into the sensor mount.

In some examples, a total of four (or more) interlocking segments provides sufficient thermal isolation from a cryogenic substrate to prevent ice buildup on the sensor probe.

In some examples, a sensor probe is disposed in a first passageway located in the upper segment.

In some examples, the sensor mount includes a vertical or near-vertical access passageway disposed at least partially through the upper segment; and the first passageway is horizontal and intersects the vertical or near-vertical access passageway.

In some examples, the sensor probe has an integral shaft that is threaded; the first passageway is threaded; and the integral shaft is screwed into the first horizontal passageway.

In some examples, the lower segment is attached to the hot or cold substrate.

In some examples, the substrate is extremely hot or extremely cold.

In some examples, the lower segment and the upper segment have a prismatic shape and pair of dovetail joints that slidingly join the lower segment to the upper segment.

In some examples, the lower segment and the upper segment have a cylindrical shape and both are threaded; and the upper segment is screwed into the lower segment.

In some examples, the upper segment has an upper exterior surface that has an optical finish chosen from a black (high emissivity) coating, a highly polished (low emissivity) surface, or a low emissivity coating, or combinations thereof.

In some examples, the sensor mount includes a total of four interlocking prismatic segments.

In some examples, the sensor mount comprises a total of four interlocking cylindrical segments.

In some examples, the mating surfaces of the interlocking joints have an optical finish chosen from a black (high emissivity) coating, a highly polished (low emissivity) surface, or a low emissivity coating, or combinations thereof.

In some examples, the gap between adjacent mating surfaces has a thickness that is less than about 0.001".

In some examples, a thermally-isolated sensor mount includes at least two interlocking cylindrical segments, including: a lower segment that has a cylindrical shape and is threaded; an upper segment that has a cylindrical shape and is threaded; a first passageway located in the upper segment operable to hold a sensor probe; an upper exterior surface of the upper segment; and a first gap between the lower segment and the upper segment. The upper segment is screwed into the lower segment.

In some examples, a thermally-isolated sensor mount includes: at least four interlocking cylindrical segments, including: a bottom segment that has a cylindrical shape and is threaded; a middle segment that has a cylindrical shape and is threaded; an upper segment that has a cylindrical shape and is threaded; a top segment that has a cylindrical shape and is threaded; a first passageway in the upper segment operable to hold a sensor probe; a first gap disposed in-between the bottom segment and the middle segment; a second gap disposed in-between the middle segment and the upper segment; and an upper exterior surface of the top segment. The middle segment is screwed into the bottom segment. The upper segment is screwed into the middle segment; and the top segment is screwed into the upper segment.

In some examples, a vertical or near-vertical access passageway is located at least partially through the upper segment and is disposed completely through the top segment. The first passageway is horizontal and intersects the vertical or near-vertical access passageway.

### BRIEF DESCRIPTION OF THE DRAWINGS

FIG. 1 shows a schematic, perspective view of a first example of a thermally-isolated, prismatic sensor mounting structure according to the present disclosure.
FIG. 2 shows a schematic, perspective cross-section view (Section A-A) of the first example of a thermally-isolated, prismatic sensor mount with an attached sensor, that is mounted onto a hot or cold substrate, according to the present disclosure.
FIG. 3 shows a schematic, elevation cross-section view (Section A-A) of the first example of a thermally-isolated, prismatic sensor mount with an attached sensor, that is mounted onto a hot or cold substrate, according to the present disclosure.
FIG. 4A shows a schematic, elevation cross-section view (Section A-A) of an example of a bottom segment for the first example of a thermally-isolated, prismatic sensor mount, according to the present disclosure.
FIG. 4B shows a schematic, elevation cross-section view (Section A-A) of an example of a middle segment of the first example of a thermally-isolated, prismatic sensor mount, according to the present disclosure.
FIG. 4C shows a schematic, elevation cross-section view (Section A-A) of an example of an upper segment of the first example of a thermally-isolated, prismatic sensor mount, according to the present disclosure.
FIG. 4D shows a schematic, elevation cross-section view (Section A-A) of an example of a top segment of the first example of a thermally-isolated, prismatic sensor mount, according to the present disclosure.
FIG. 5 shows a schematic, exploded perspective view of the first example of a thermally-isolated, prismatic sensor mount with an attached sensor, according to the present disclosure.
FIG. 6 shows a schematic, partially-exploded perspective view of the first example of a thermally-isolated, prismatic sensor mount with an attached sensor, according to the present disclosure.
FIG. 7 shows a schematic, perspective view of a second example of a thermally-isolated, cylindrical sensor mount attached to a hot or cold substrate, according to the present disclosure.
FIG. 8 shows a schematic, perspective cross-section view (Section B-B) of the second example of a thermally-isolated, cylindrical sensor mount attached to a hot or cold substrate, according to the present disclosure.
FIG. 9 shows a schematic, exploded perspective view of the second example of a thermally-isolated, cylindrical sensor mount with an attached sensor, according to the present disclosure.
FIG. 10 shows a schematic, exploded cross-section view of the second example of a thermally-isolated, cylindrical sensor mount with an attached sensor, according to the present disclosure.
FIG. 11 shows a schematic, exploded cross-section view of the second example of a thermally-isolated, cylindrical sensor mount with an attached sensor, according to the present disclosure.
FIG. 12 shows a schematic, perspective view of a third example of a thermally-isolated, prismatic, sensor mount attached to a substrate, according to the present disclosure.
FIG. 13 shows a schematic, elevation cross-section view (Section C-C) of the third example of a thermally-isolated, prismatic, sensor mount attached to a substrate, with a sensor probe attached to sensor mount, according to the present disclosure.
FIG. 14 shows a schematic, perspective view of a fourth example of a 2-level, thermally-isolated, cylindrical sensor mount, according to the present disclosure.
FIG. 15 shows a schematic, perspective cross-section view (Section D-D) of the fourth example of a thermally-isolated, cylindrical sensor mount attached to a hot or cold substrate, according to the present disclosure.

### DETAILED DESCRIPTION

This disclosure is susceptible of example in many different forms. Representative examples of the disclosure are shown in the drawings and will herein be described in detail with the understanding that these examples are provided as an exemplification of the disclosed principles, not limitations of the broad aspects of the disclosure. To that extent, elements and limitations that are described, for example, in the Introduction, Summary, Detailed Description, and Abstract sections, but not explicitly set forth in the Claims, should not be incorporated into the Claims, singly or collectively, by implication, inference, or otherwise.

For purposes of the present detailed description, unless specifically disclaimed: the singular includes the plural and vice versa; the words "and" and "or" shall be both conjunctive and disjunctive; the words "any" and "all" shall both mean "any and all"; and the words "including," "containing," "comprising," "having," and the like, shall each mean "including without limitation." Moreover, words of approximation, such as "about," "almost," "substantially," "generally," "approximately," and the like, can each be used herein in the sense of "at, near, or nearly at," or "within 0-5% of," or "within acceptable manufacturing tolerances," or any logical combination thereof, for example. Lastly, directional adjectives and adverbs, such as: fore, aft, inboard, outboard, starboard, port, vertical, horizontal, above, below, upward, downward, front, back, left, right, etc., can be with respect to the plane of a substrate to which the sensor mount is attached. The drawings are not drawn to scale, but, rather, are schematic drawings that illustrate the geometrical relationships between elements and objects.

The words *"sensor"* and *"sensor probe"* are used interchangeably herein. The word *"extremely",* as it refers to the substrate temperature, T_{substrate}, can include both cryogenic temperatures (e.g., T_{substrate} < -250 F) and high furnace temperatures (e.g., T_{substrate} > 600 F). The word *"interlocking"* includes two types of joints, i.e., (1) dovetail joints for prismatic sensor mount assemblies, and (2) threaded, screwed-together joints for cylindrical sensor mount assemblies. The phrase *"low emissivity"* means a thermal emissivity ≤ 0.1, and the phrase *"high emissivity"* means a thermal emissivity ≥ 0.9. The symbol " <i. " means "centerline" and indicates the centerline of a cylindrical object or cylindrical aperture.

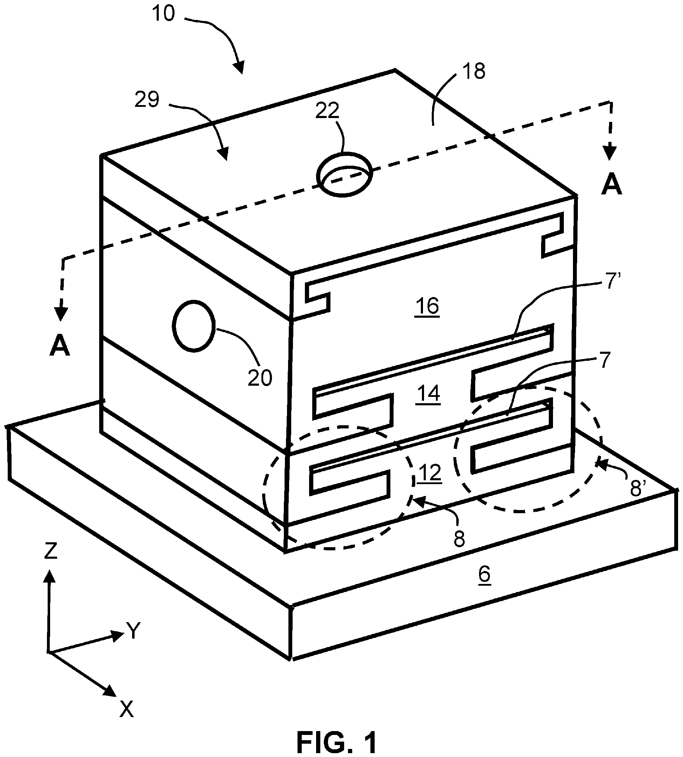

FIG. 1 shows a schematic, perspective view of a first example of a thermally-isolated, prismatic sensor mount 10, according to the present disclosure. Sensor mount 10 comprises a series of nested (i.e., stacked), interlocking, prismatic segments (e.g., four interlocking segments 12, 14, 16, and 18). There are 3 stacked levels of dovetail joints, wherein each level has a pair of dovetail joints 8, 8', etc, for a total of 6 dovetail joints. Sensor mount 10 is attached to substrate 6 (e.g., with screws, adhesive, brazing, or other methods of attachment). Substrate 6 can be extremely cold (e.g., -300 F), or extremely hot(e.g., ≥ 600 F). At the lower end of sensor mount 10 is a first, interlocking, bottom segment 12, which has a capital "I" shape. Next, a second, middle segment 14 is disposed above, and slidably interlocks with, bottom segment 12 using a first pair of left/right dovetail joints 8 and 8', respectively. Next, the third, upper segment 16 is disposed above, and slidably interlocks with, middle segment 14 using a second pair of left/right dovetail joints (not numbered). Finally, at the top, the top segment 18 is disposed above, and slidably interlocks with, the upper segment 16 using a third pair of left/right dovetail joints (not numbered). The four interlocking, prismatic segments 12, 14, 16, and 18 slide together to make a prismatic assembly that securely holds the sensor (not shown), while providing excellent thermal isolation from substrate 6 (which can be extremely hot or cold).

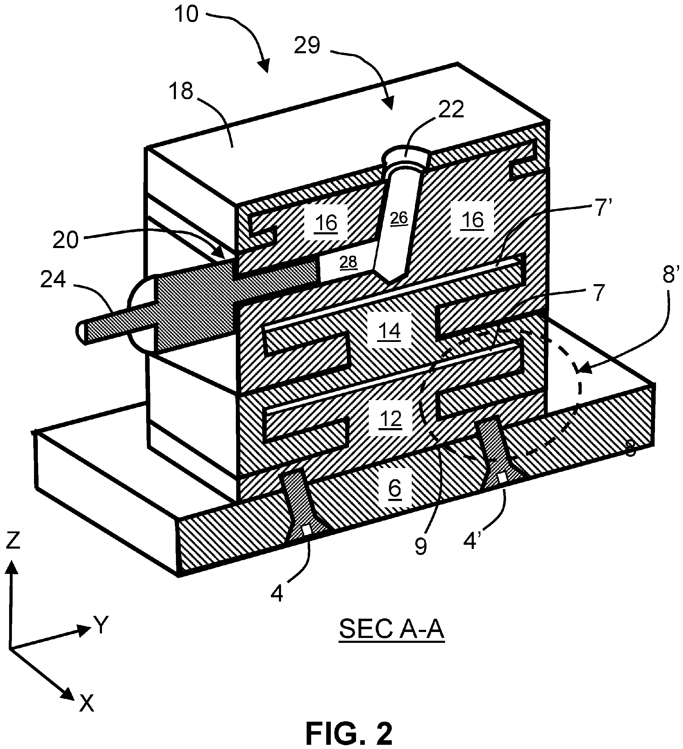

Referring still to FIG. 1, a first horizontal aperture 20 is located in upper segment 16, for attaching the sensor (not shown) to sensor mount 10. A second, near-vertical (angled) aperture 22 is located in the approximate center of top segment 18 for providing electrical/signal access to the sensor (not shown). See FIG. 2 for internal details of the first and second apertures 20 and 22, respectively. The four interlocking, prismatic segments 12, 14, 16, 18 can be securely locked together with removeable set screws, dowel pins, clips, etc. (not shown), or other removeable locking attachment methods. Note that it can be useful to have a roughened interfacial gap between each interlocking segment to increase the gap thermal resistance and provide increased thermal isolation of sensor (not shown) from substrate 6. Sensor mount 10 can have a prismatic shape (e.g., a rectangular or cubic shape). The upper exterior surface 29 of top prismatic segment 18 can have an optical finish chosen from a black (high emissivity) coating, a highly polished (low emissivity) surface, or a low emissivity coating, or combinations thereof.

FIG. 2 shows a schematic, perspective, cross-section view (Section A-A) of the first example of a thermally-isolated, prismatic sensor mount 10 with an attached sensor 24, which is mounted onto substrate 6, according to the present disclosure. Substrate 6 can have an extremely cold temperature or an extremely hot temperature. Sensor 24 has an integral shaft 25 that is inserted into horizontal aperture 20 of sensor mount 10. In some examples, shaft 25 can be screwed into horizontal aperture 20. At the lower end of sensor mount 10 is a first, interlocking, bottom segment 12, which has a capital "I" shape. Next, the second, middle segment 14 is disposed above, and slidably interlocks with, bottom segment 12 using a first pair of left/right dovetail joints (not numbered). Next, the third, upper segment 16 is disposed above, and slidably interlocks with, middle segment 14 using a second pair of left/right dovetail joints (not numbered). Finally, at the top, the fourth, top segment 18 is disposed above, and slidably interlocks with, upper segment 16 using a third pair of left/right dovetail joints (not numbered). The four interlocking prismatic segments 12, 14, 16, and 18 slide together via the dovetail joints to make a prismatic assembly 10 that securely holds sensor 24, while providing excellent thermal isolation from substrate 6. A first gap 7 is disposed between the bottom segment 12 and the middle segment 14. Similarly, a second gap 7' is disposed between the middle segment 14 and the upper segment 16. At cryogenic temperatures, the thickness of gap 7, 7' can be quite small (e.g., < 0.001 inches) in order to prevent "cryopumping" across the gap 7, 7' (which undesirably increases heat transfer across the gap). The bottom surface 9 of bottom segment 12 can be artificially roughened to increase the gap thermal resistance across the joint between bottom segment 12 and substrate 6. The upper exterior surface 29 of top prismatic segment 18 can have an optical finish chosen from a black (high emissivity) coating, a highly polished (low emissivity) surface, or a low emissivity coating, or combinations thereof.

Referring still to FIG. 2, a first, horizontal aperture 20 is located in upper segment 16, for attaching sensor 24 (with an integral shaft 25) in sensor mount 10. A second, near-vertical (angled) access passageway 22 is located in the center of top segment 18 for providing electrical/signal access to sensor 24 through intersecting cylindrical passageways 26 and 28. Horizontal, cylindrical passageway 28 connects to horizontal aperture 20. Horizontal, cylindrical passageway 28 can be threaded to mate with optional threads on sensor shaft 25. The four interlocking, prismatic segments 12, 14, 16, 18 can be securely locked together with removable set screws, dowel pins, clips, or other locking methods (not shown). Sensor mount 10 can be removably attached to substrate 6 with one or more screws 4, 4', etc. or other methods of attachment. Note that it can be useful to have a roughened interfacial gap between each interlocking segment, which increases the gap thermal resistance. This configuration provides increased thermal isolation of sensor 24 from substrate 6 (which can be extremely hot or cold).

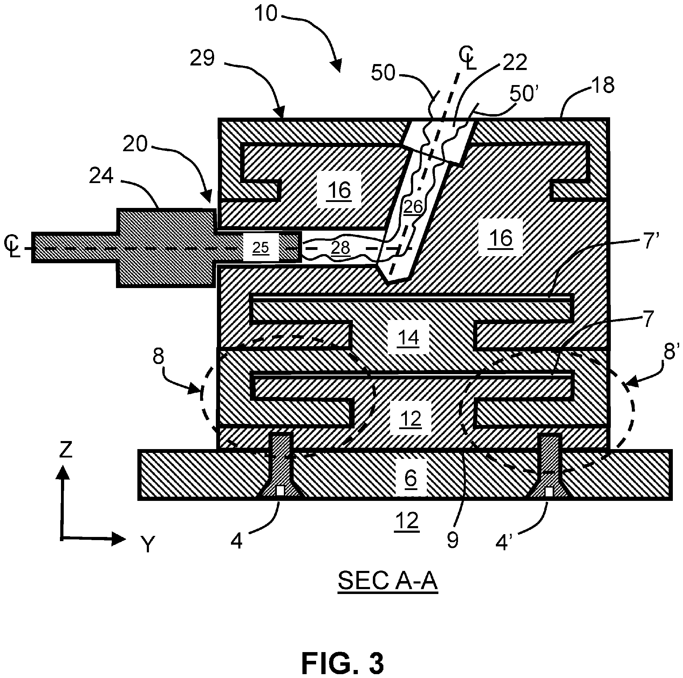

FIG. 3 shows a schematic, elevation, cross-section view (Section A-A) of the first example of a thermally-isolated, prismatic sensor mount 10 with an attached sensor 24, which is mounted onto substrate 6, according to the present disclosure. Substrate 6 can have an extremely cold temperature or an extremely hot temperature. Sensor 24 has an integral shaft 25 that is inserted into horizontal aperture 20 of sensor mount 10. In some examples, sensor 24 can be screwed into horizontal cylindrical passageway 28 (which can be threaded). At the lower end of sensor mount 10 is a first, interlocking bottom segment 12, which has a capital "I" shape. Next, the second, middle segment 14 is disposed above, and slidably interlocks with, bottom segment 12 using a first pair of left/right dovetail joints 8, 8'. Next, the third, upper segment 16 is disposed above, and slidably interlocks with, middle segment 14 using a second pair of left/right dovetail joints 2, 2'. Finally, at the top, the top segment 18 is disposed above, and slidably interlocks with, upper segment 16 using a third pair of left/right dovetail joints 3, 3'. The four interlocking prismatic segments 12, 14, 16, and 18 slide together via the three pairs of dovetail joints to make a prismatic assembly 10 that securely holds sensor 24, while providing excellent thermal isolation from substrate 6.

Referring still to FIG. 3 a first gap 7 is disposed between the bottom segment 12 and the middle segment 14. Similarly, a second gap 7' is disposed between the middle segment 14 and the upper segment 16. At cryogenic temperatures, the thickness of gap 7, 7' can be quite small (e.g., < 0.001 inches) in order to prevent "cryopumping" across the gap 7, 7' (which undesirably increases heat transfer across the gap). The bottom surface 9 of bottom segment 12 can be artificially roughened to increase the gap thermal resistance across the joint between bottom segment 12 and substrate 6. The upper exterior surface 29 of top prismatic segment 18 and/or the exterior sides can have an optical finish chosen from a black (high emissivity) coating, a highly polished (low emissivity) surface, or a low emissivity coating, or combinations thereof.

Referring still to FIG. 3, a first, horizontal aperture 20 is located on the side of upper segment 16, for mounting sensor 24 in sensor mount 10. A second, near-vertical (angled) aperture 22 is located in the center of top segment 18, which provides electrical/signal access to sensor 24 through intersecting cylindrical passageways 26 and 28. Horizontal, cylindrical passageway 28 can be threaded to mate with optional threads on shaft 25 of sensor 24. Horizontal, cylindrical passageway 28 connects to horizontal aperture 20. The four interlocking segments 12, 14, 16, 18 can be securely locked together with removable set screws, dowel pins, clips, or other locking methods (not shown). Cylindrical passageway 26 can be drilled at a 20-30 degree angle to the normal direction of the upper exterior surface 29 of top segment 18. Note that it can be useful to have a roughened interfacial gap between each interlocking segment, which increases the gap thermal resistance. This configuration provides increased thermal isolation of sensor 24 from substrate 6 (which can be extremely hot or cold). Sensor mount 10 can be removably attached to substrate 6 with one or more screws 4, 4', etc. or other methods of attachment. Electrical wires 50 and 50' from sensor shaft 25 are contained within cylindrical passageways 26 and 28 and exit through upper aperture 22.

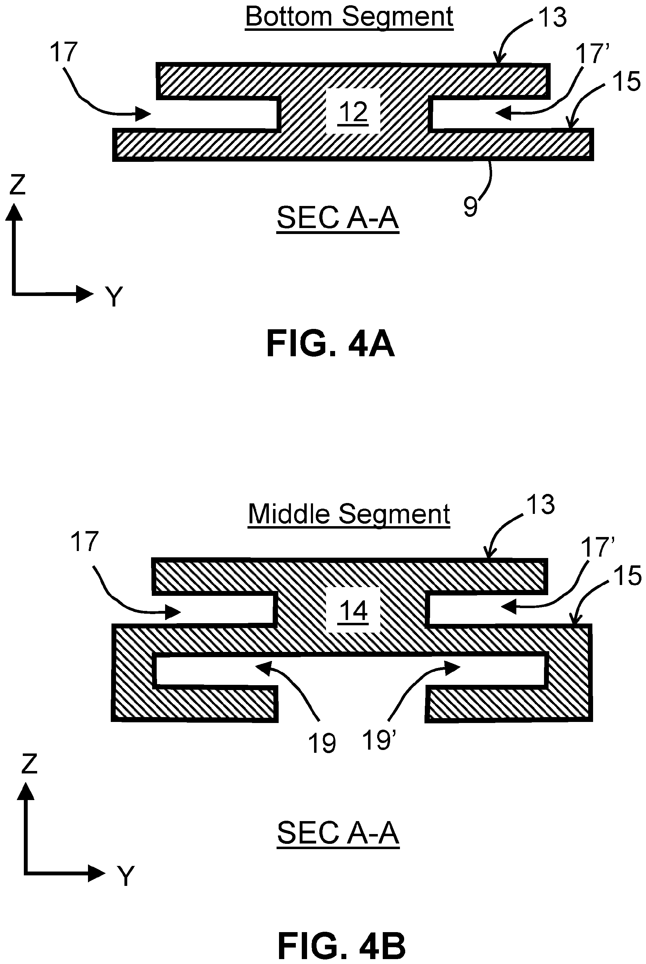

FIG. 4A shows a schematic, elevation, cross-section view (Section A-A) of an example of a bottom segment 12 for the first example of a thermally-isolated, prismatic sensor mount 10, according to the present disclosure. Bottom segment 12 has a shape of the capital letter "I", with an upper wing 13, an extended, lower shoulder 15, and a pair of horizontal open recesses 17, 17' that are used to form a first pair of left/right dovetail joints (not numbered), respectively. Hence, bottom segment 12 is called a "double dovetail" segment. Bottom segment 12 has an upper width = **A** and a lower width = **B,** wherein **A** < **B.** The bottom surface 9 of bottom segment 12 is identified.

FIG. 4B shows a schematic, elevation cross-section view (Section A-A) of an example of a middle segment 14 of the first example of a thermally-isolated, prismatic sensor mount 10, according to the present disclosure. Middle segment 14 has a complex cross-sectional shape, comprising twenty, connected external surfaces. The lower region of middle segment 14 comprises a lower pair of reentrant recesses 19 and 19', which form a first pair of left/right dovetail joints (not numbered). The upper region of middle segment 14 comprises an upper pair of open recesses 17 and 17', which are used to form a second pair of left/right dovetail joints (not numbered). Middle segment 14 also comprises an upper wing 13 and an extended, lower shoulder 15. In this example, middle segment 14 comprises a total of four dovetail joints. Hence, middle segment 14 is called a *"quadruple dovetail"* segment. Middle segment 14 has an upper width = **A** and a lower width = **B,** wherein **A** < **B.**

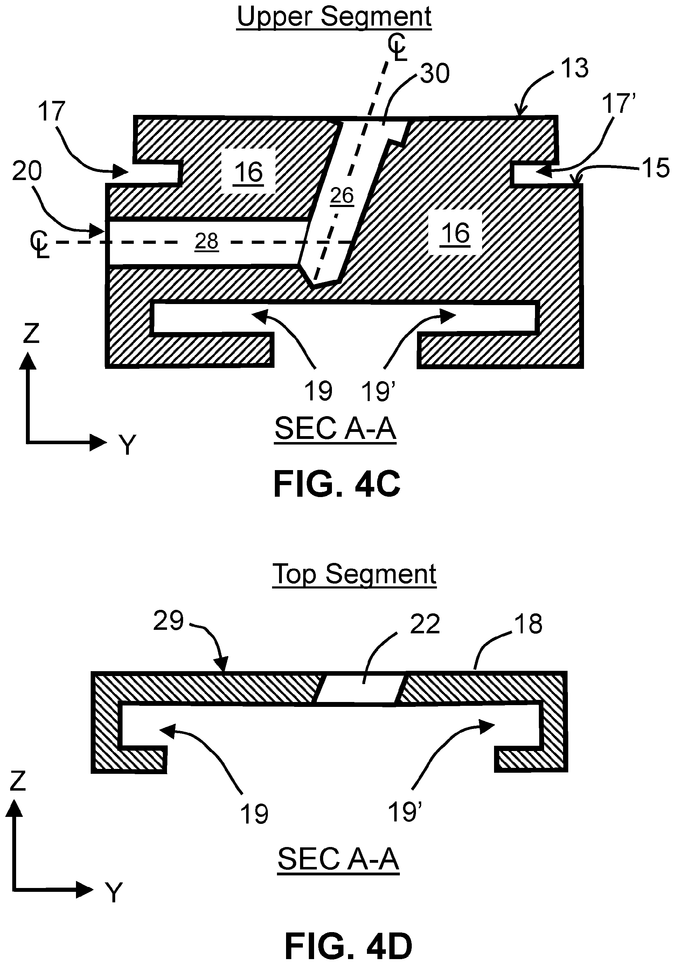

FIG. 4C shows a schematic, elevation cross-section view (Section A-A) of an example of an upper segment 16 of the first example of a thermally-isolated, prismatic sensor mount 10, according to the present disclosure. Upper segment 16 has a complex cross-sectional shape, comprising twenty different external surfaces. The lower region of upper segment 16 comprises a lower pair of reentrant recesses 19 and 19', which are used to form the second pair of left/right dovetail joints (not numbered). The upper region of upper segment 16 comprises an upper pair of open recesses 17 and 17', which are used to form the third pair of left/right dovetail joints (not numbered). Upper segment 16 also comprises an upper wing 13 and an extended, lower shoulder 15. Upper segment 16 comprise a total of four dovetail joints in this example. Hence, upper segment 16 is called a *"quadruple dovetail"* segment.

Referring still to FIG. 4C, a first horizontal aperture 20 is located in the side of upper segment 16, for mounting sensor 24 (not shown) into upper segment 16. A first, horizontal, cylindrical aperture 28 serves as a horizontal cylindrical passageway that connects to horizontal aperture 20. A second, nearly-vertical, (angled) cylindrical passageway 26 is located in the approximate center of upper segment 16. Intersecting cylindrical passageways 26 and 28 provide electrical/signal access to sensor 24 (not shown) from near-vertical access passageway 30 (which can be threaded) in the top surface 13 of upper segment 16. Upper segment 16 has an upper width = A and a lower width = **B,** wherein **A** < **B**. Note that middle segment 14 is topologically identical to upper segment 16 (both have twenty external surfaces and the same number of recesses (i.e., four recesses each)), even though the specific dimensions and proportions are different.

FIG. 4D shows a schematic, elevation cross-section view (Section A-A) of an example of a top segment 18 of the first example of a thermally-isolated, prismatic sensor mount 10, according to the present disclosure. Top segment 18 has a shape of a sideways capital letter **"C"** and has a pair of horizontal reentrant recesses 19, 19' that are used to form the third pair of left/right dovetail joints (not numbered), respectively. Hence, top segment 18 is called a *"double dovetail"* segment. Top segment 18 has a near-vertical, angled access through-aperture 22 (which can be a threaded aperture), that is aligned with aperture 30 in upper segment 16, for providing electrical/signal access to intersecting, cylindrical passageways 26 and 28. Top segment 18 has an upper width = **A.** The upper exterior surface 29 of top prismatic segment 18 and/or the exterior sides can have an optical finish chosen from a black (high emissivity) coating, a highly polished (low emissivity) surface, or a low emissivity coating, or combinations thereof.

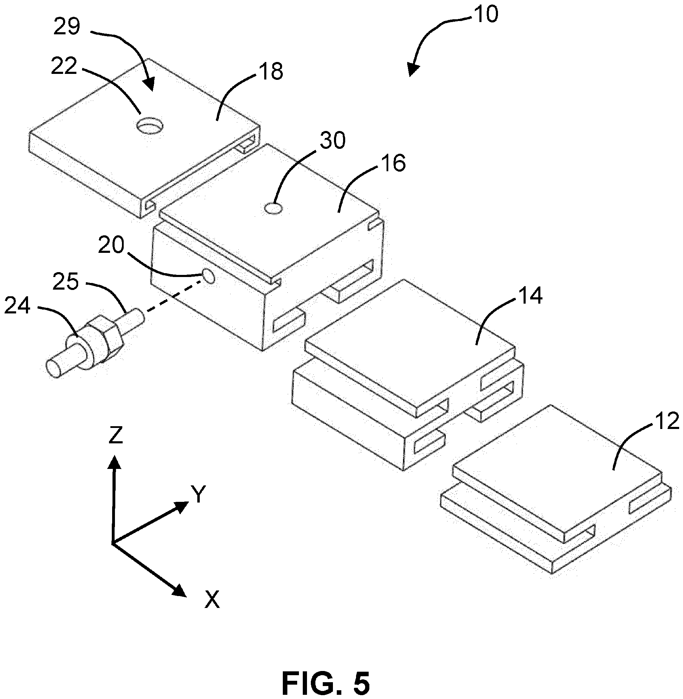

FIG. 5 shows a schematic, exploded, perspective view of the first example of a thermally-isolated, prismatic sensor mount 10 with a mounted sensor 24, according to the present disclosure. Sensor mount 10 comprises four interlocking, prismatic segments 12, 14, 16, and 18, with dovetail joints (not numbered) which slide together to make a seamless, prismatic assembly (e.g., a cube). Segment 16 has a near-vertical, angled access passageway 30 and a horizontal sensor horizontal aperture 20 for holding sensor 24. Segment 18 has an upper, near-vertical, angled access passageway 22 (which can be threaded) that is aligned with aperture 30 (which also can be threaded). Sensor 24 has an integral shaft 25 that is inserted into horizontal aperture 20 of sensor mount 10. In some examples, shaft 25 is threaded and it can be screwed into threaded horizontal aperture 20. The upper exterior surface 29 of top prismatic segment 18 and/or the exterior sides can have an optical finish chosen from a black (high emissivity) coating, a highly polished (low emissivity) surface, or a low emissivity coating, or combinations thereof.

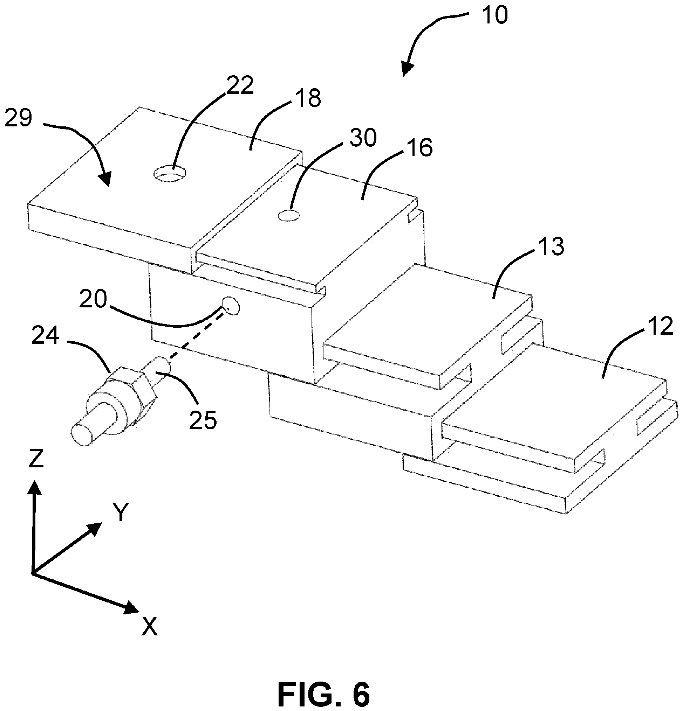

FIG. 6 shows a schematic, partially-exploded, perspective view of the first example of a thermally-isolated, prismatic sensor mount 10 with a mounted sensor probe 24, according to the present disclosure. In this view, the individual interlocking, prismatic segments 12, 14, 16, and 18 are partially assembled by sliding them together using multiple dovetail joints. Sensor mount 10 comprises four interlocking, prismatic segments 12, 14, 16, and 18, which slide together to make a seamless prismatic shape (e.g., a cube). Segment 16 has a near-vertical, angled access passageway 30 and a horizontal sensor horizontal aperture 20 for holding sensor 24. Segment 18 has an upper, near-vertical, angled access passageway 22 (which can be a threaded aperture) that is aligned with aperture 30 (which can be threaded). Sensor 24 has an integral shaft 25 that is inserted into horizontal aperture 20 of sensor mount 10. In some examples, shaft 25 is threaded and it can be screwed into threaded horizontal aperture 20. The upper exterior surface 29 of top prismatic segment 18 and/or the exterior sides can have an optical finish chosen from a black (high emissivity) coating, a highly polished (low emissivity) surface, or a low emissivity coating, or combinations thereof.

In some examples, the total number of interlocking prismatic segments of a prismatic sensor mount can be different than four. For example, the number of interlocking prismatic segments can be 2, 3, 4, 5, 6, 7 or 8 segments, depending on how much thermal isolation is needed.

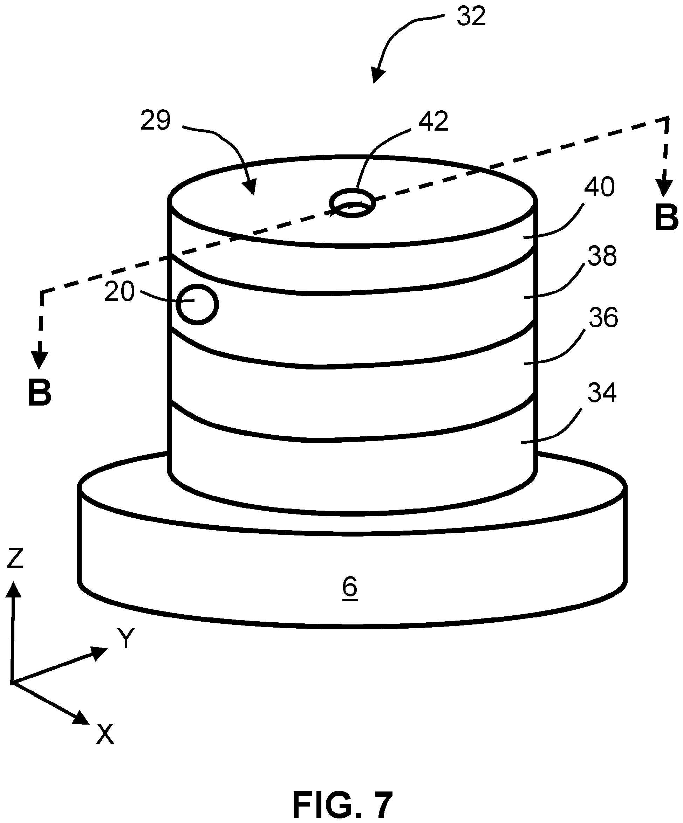

FIG. 7 shows a schematic, perspective view of a second example of a thermally-isolated, cylindrical sensor mount 32 that is removably attached to substrate 6, according to the present disclosure. Substrate 6 can have an extremely cold temperature or an extremely hot temperature. Cylindrical sensor mount 32 can be made of four, threaded, cylindrical segments 34, 36, 38, and 40, each with threaded sections that screw into each other. The natural gaps between the screw threads increase the interfacial gap thermal resistance, which increases the total amount of thermal isolation. A vertical access aperture 42 is disposed on the top of top segment 40, and a horizontal sensor horizontal aperture 20 (which can be threaded) is disposed on a side of cylindrical segment 38. The bottom surface 9 of bottom segment 34 can be artificially roughened to increase the gap thermal resistance across the joint between bottom segment 34 and substrate 6. The upper exterior surface 29 and/or the exterior side walls of top cylindrical segment 40 can have an optical finish chosen from a black (high emissivity) coating, a highly polished (low emissivity) surface, or a low emissivity coating, or combinations thereof.

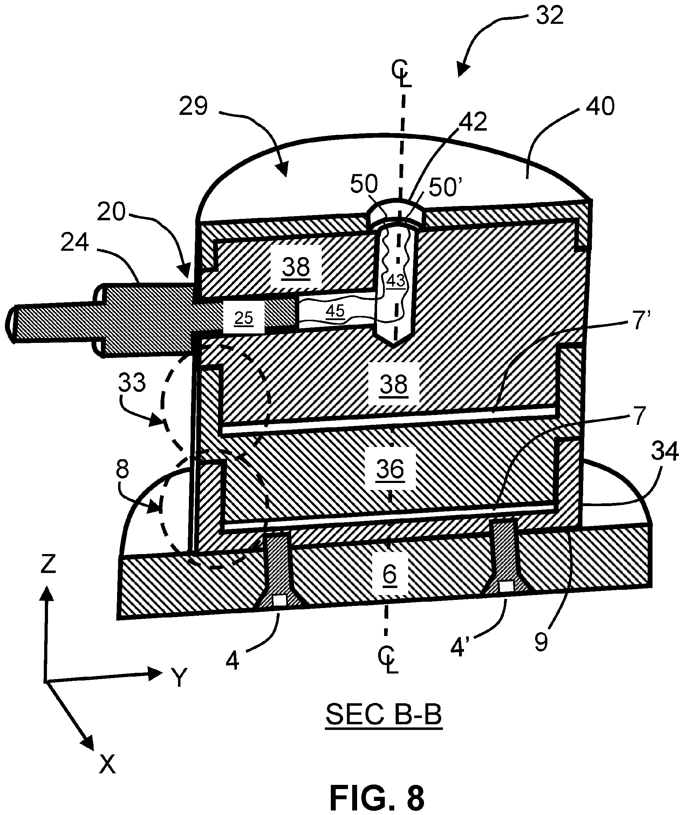

FIG. 8 shows a schematic, perspective, cross-section view (Section B-B) of the second example of a thermally-isolated, cylindrical sensor mount 32 that is attached to substrate 6, according to the present disclosure. Substrate 6 can have an extremely cold temperature or an extremely hot temperature. Cylindrical sensor mount 32 comprises a bottom cylindrical segment 34 that is removably attached to substrate 6 with, for example, one or more screws 4, 4', etc., or other methods of attachment. Then, middle cylindrical segment 36 is screwed into bottom cylindrical segment 34. Then, upper cylindrical segment 38 is screwed into middle cylindrical segment 36. Finally, top cylindrical segment 40 is screwed onto upper cylindrical segment 38. Sensor 24 has an integral shaft 25 (which can be threaded) that is mounted through horizontal aperture 20 into cylindrical passageway 45 (which can be threaded) of upper cylindrical segment 38. Electrical wires/signals 50 and 50' are threaded through intersecting cylindrical passageways 43, 45 and exit out through vertical access passageway 42 in top cylindrical segment 40. A first gap 7 is disposed between the bottom segment 12 and the middle segment 14. Similarly, a second gap 7' is disposed between the middle segment 14 and the upper segment 16. At cryogenic temperatures, the thickness of gap 7, 7' can be quite small (e.g., < 0.001 inches) in order to prevent "cryopumping" across the gap 7, 7' (which undesirably increases heat transfer across the gap). The bottom surface 9 of bottom segment 34 can be artificially roughened to increase the gap thermal resistance across the joint between bottom segment 34 and substrate 6. The upper exterior surface 29 of top cylindrical segment 40 can have an optical finish chosen from a black (high emissivity) coating, a highly polished (low emissivity) surface, or a low emissivity coating, or combinations thereof. This nested, threaded, cylindrical assembly 32 results in a strong and compact, thermally-isolated sensor mount 32.

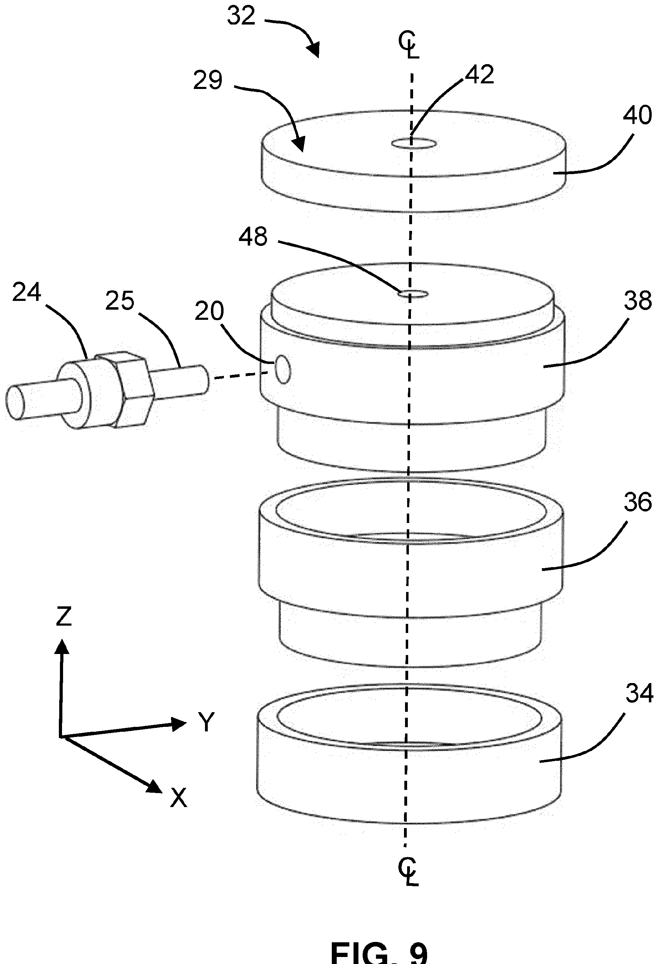

FIG. 9 shows a schematic, exploded, perspective view of the second example of a thermally-isolated, cylindrical sensor mount 32 with an attached sensor 24, according to the present disclosure. Firstly, middle cylindrical segment 36 is screwed into bottom cylindrical segment 34. Then, upper cylindrical segment 38 is screwed into middle cylindrical segment 36. Finally, top cylindrical segment 40 is screwed onto upper cylindrical segment 38. Sensor 24 (which can be threaded) is mounted through horizontal aperture 20 into upper cylindrical segment 38. Vertical access passageway 42 (which can be threaded), is approximately centered in top cylindrical segment 40 and is aligned with vertical access passageway 48 (which can be threaded) that is approximately centered in upper cylindrical segment 38. Sensor 24 has an integral shaft 25 that is inserted into horizontal aperture 20 of sensor mount 32. In some examples, shaft 25 is threaded and it can be screwed into threaded horizontal aperture 20. The upper exterior surface 29 of top cylindrical segment 40 can have an optical finish chosen from a black (high emissivity) coating, a highly polished (low emissivity) surface, or a low emissivity coating, or combinations thereof. This nested, threaded, cylindrical assembly 32 results in a strong, compact, thermally-isolated mount 32.

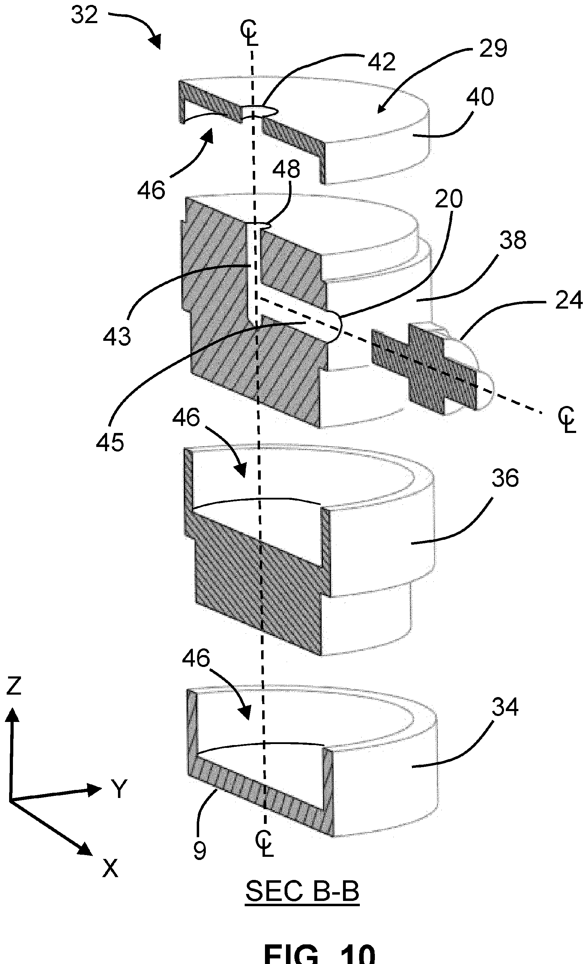

FIG. 10 shows a schematic, exploded, cross-section view (Section B-B) of the second example of a thermally-isolated, cylindrical sensor mount 32 with an attached sensor 24, according to the present disclosure. Firstly, middle cylindrical segment 36 is screwed into bottom cylindrical segment 34. Then, upper cylindrical segment 38 is screwed into middle cylindrical segment 36. Finally, top cylindrical segment 40 is screwed onto upper cylindrical segment 38. Sensor 24 (which can be threaded) is mounted through horizontal aperture 20 into upper cylindrical segment 38. First, vertical access passageway 42 (which can be threaded) is centered in top cylindrical segment 40 and is aligned with second, vertical access passageway 48 (which can be threaded) that is centered in upper cylindrical segment 38. Cylindrical passageways 45 and 43 (which can be threaded) provide access for electrical/signal wires (not shown), which are connected to sensor shaft 25. The wires exit the top of sensor mount 32 via vertically-aligned access passageways 48 and 42. Cylindrical segments 34, 36 and 40 each have a deep, recessed cavity 46 into which each mating cylinder is screwed into. Sensor 24 has an integral shaft 25 that is inserted into horizontal aperture 20 of sensor mount 10. In some examples, shaft 25 is threaded and it can be screwed into horizontal aperture 20. The upper exterior surface 29 of top cylindrical segment 40 can have an optical finish chosen from a black (high emissivity) coating, a highly polished (low emissivity) surface, or a low emissivity coating, or combinations thereof. This nested, threaded, cylindrical assembly 32 results in a strong, compact, thermally-isolated mount 32.

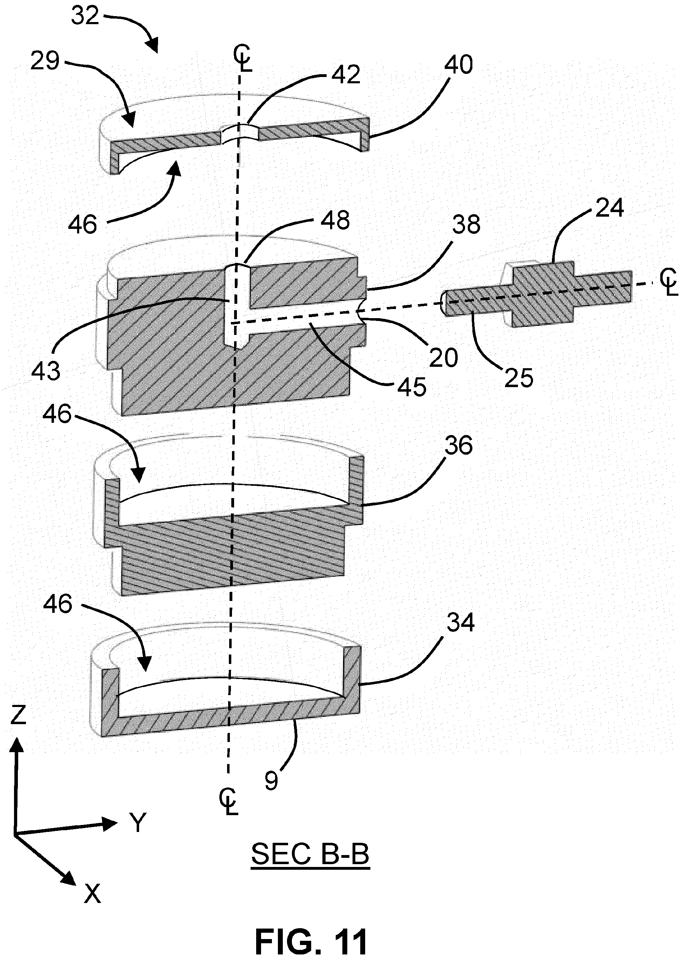

FIG. 11 shows a schematic, exploded, cross-section view (Section B-B) of the second example of a thermally-isolated, cylindrical sensor mount 32 with an attached sensor 24, according to the present disclosure. Firstly, middle cylindrical segment 36 is screwed into bottom cylindrical segment 34. Then, upper cylindrical segment 38 is screwed into middle cylindrical segment 36. Finally, top cylindrical segment 40 is screwed onto upper cylindrical segment 38. Sensor 24 (which can be threaded) is mounted through horizontal aperture 20 into upper cylindrical segment 38. First, vertical access passageway 42 (which can be threaded) is centered in top cylindrical segment 40 and is aligned with second, vertical access passageway 48 (which can be threaded) that is centered in upper cylindrical segment 38. Intersecting cylindrical passageways 45 and 43 (which can be threaded) provide access for electrical/signal wires (not shown) (which are connected to sensor shaft 25). These signal wires exit the top of sensor mount 32 via vertically-aligned access passageways 48 and 42. Cylindrical segments 34, 36 and 40 each have a deep, recessed cavity 46 that each mating cylinder is screwed into. Sensor 24 has an integral shaft 25 that is inserted into horizontal aperture 20 of sensor mount 32. In some examples, shaft 25 is threaded and it can be screwed into first threaded cylindrical passageway 45. The upper exterior surface 29 of top cylindrical segment 40 can have an optical finish chosen from a black (high emissivity) coating, a highly polished (low emissivity) surface, or a low emissivity coating, or combinations thereof. This nested, threaded, cylindrical assembly 32 results in a strong, compact, thermally-isolated mount 32.

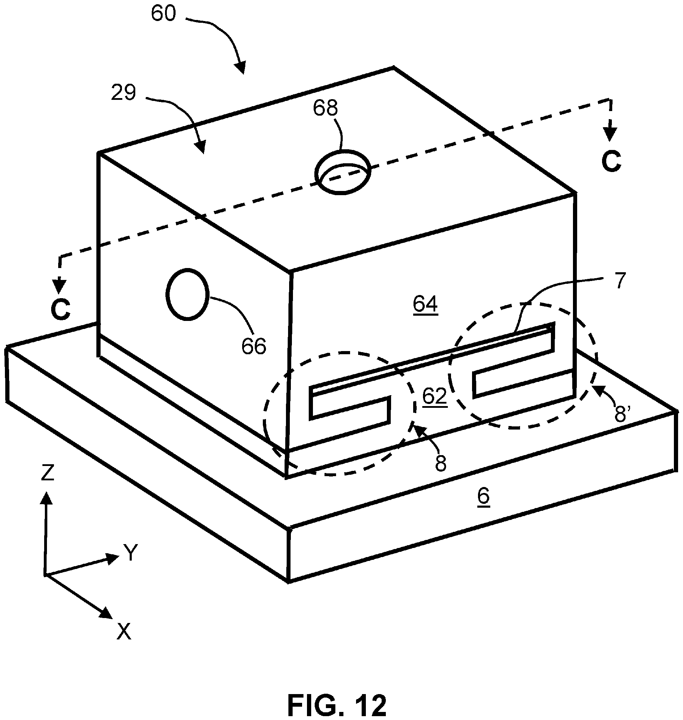

FIG. 12 shows a schematic, perspective view of a third example of a thermally-isolated, prismatic, sensor mount 60 attached to a substrate 6, according to the present disclosure. Substrate 6 can have an extremely cold temperature or an extremely hot temperature. Sensor mount 60 comprises a pair of nested, interlocking, prismatic segments (i.e., two segments) that are slidably joined together with a pair of left/right dovetail joints 8 and 8'. Sensor mount 60 is attached to substrate 6 with, for example, screws, adhesive, brazing, or other attachment methods (not shown). A first, interlocking, lower segment 62, which has a capital **"I"** shape, is located at a lower part of sensor mount 60. A second, upper segment 64 is disposed above, and slidably interlocks with, bottom segment 62 using the pair of left/right dovetail joints 8 and 8'. Horizontal aperture 66 is disposed on a side of upper segment 64, which holds sensor probe 24 (not shown). Near-vertical, angled access passageway 68 is disposed in the approximate center of upper segment 64. The two, interlocking, prismatic segments 62 and 64 slide together via the pair of left/right dovetail joints to make a prismatic assembly 60 that securely holds sensor 24, while providing excellent thermal isolation from substrate 6. Sensor 24 has an integral shaft 25 that is inserted into horizontal aperture 20 of sensor mount 60. In some examples, shaft 25 is threaded and it can be screwed into the side of upper segment 64 (which can be threaded). A first gap 7 is disposed between the lower segment 62 and the upper segment 64. At cryogenic temperatures, the thickness of gap 7 can be quite small (e.g., < 0.001 inches) in order to prevent "cryopumping" across the gap 7 (which undesirably increases heat transfer across the gap). The bottom surface 9 of lower segment 62 can be artificially roughened to increase the gap thermal resistance across the joint between bottom segment 62 and substrate 6. The upper exterior surface 29 of upper segment 64 and/or the exterior sides can have an optical finish chosen from a black (high emissivity) coating, a highly polished (low emissivity) surface, or a low emissivity coating, or combinations thereof. This nested, threaded, prismatic assembly 60 results in a strong, compact, and thermally-isolated mount 60.

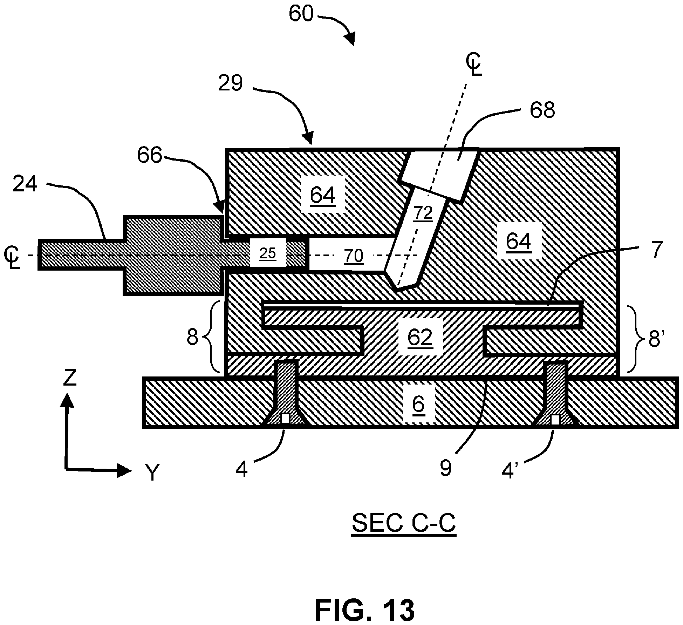

FIG. 13 shows a schematic, elevation, cross-section view (Section C-C) of the third example of a thermally-isolated, prismatic, sensor mount 60 attached to a substrate 6, with a sensor probe 24 attached to sensor mount 60, according to the present disclosure. Substrate 6 can have an extremely cold temperature or an extremely hot temperature. Sensor 24 (which can be threaded) is attached to sensor mount 60 through horizontal aperture 20. In some examples, sensor 24 can be screwed into upper segment 64 via horizontal aperture 20. At the lower end of sensor mount 60 is a first, interlocking, prismatic, lower segment 62, which has a capital "I" shape. A second, upper segment 64 is disposed above, and slidably interlocks with, lower segment 62 by using a pair of left/right dovetail joints 8 and 8'. The two, interlocking, prismatic segments 62 and 64 slide together using the dovetail joints 8, 8' to make a prismatic (e.g., cubic) assembly 60 that securely holds sensor 24, while providing enhanced thermal isolation from substrate 6. Hence, this example of sensor mount 60 is called a *"double dovetail"* mount. Sensor 24 has an integral shaft 25 that is inserted into horizontal aperture 66 of sensor mount 60. In some examples, sensor probe shaft 25 is threaded and can be screwed into threaded upper segment 64 via horizontal aperture 20. The bottom surface 9 of lower segment 62 can be artificially roughened to increase the gap thermal resistance across the joint between bottom segment 62 and substrate 6. The upper exterior surface 29 of upper segment 64 and/or the exterior sides can have an optical finish chosen from a black (high emissivity) coating, a highly polished (low emissivity) surface, or a low emissivity coating, or combinations thereof. This nested, interlocking assembly results in a strong, compact, thermally-isolated mount 60.

Referring still to FIG. 13, a first, horizontal aperture 20 is located in a side of upper segment 64, wherein horizontal aperture 20 is used for mounting sensor 24 in sensor mount 60. A second, near-vertical, angled aperture 68 is located in the approximate center of upper segment 64 for providing electrical/signal access to sensor shaft 25 through intersecting, cylindrical passageways 70 and 72. Horizontal first passageway 70 can be threaded to mate with optional threads on sensor shaft 25. Horizontal first passageway 70 is connected to horizontal aperture 20. The two interlocking segments 62 and 64 can be locked together with set screws, dowel pins, or other locking methods (not shown). Near-vertical, angled cylindrical passageway 72 can be drilled at a 20-30 degree angle to the upper exterior surface 29 of upper segment 64. Note that it can be useful to have a roughened interfacial gap between each interlocking, prismatic segment, which increases the gap thermal resistance. This nested, interlocking assembly provides excellent thermal isolation of sensor 24 from substrate 6 (which can be extremely hot or cold). Sensor mount 60 can be removably attached to substrate 6 with one or more screws 4, 4', etc. (or other methods of attachment).

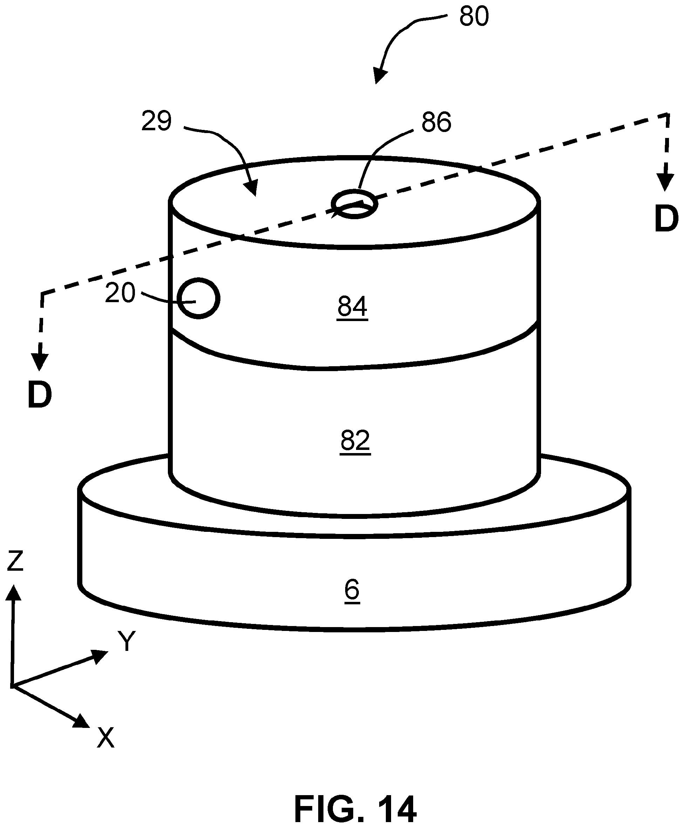

FIG. 14 shows a schematic, perspective view of a fourth example of a thermally-isolated, cylindrical sensor mount 80, according to the present disclosure. Cylindrical sensor mount 80 comprises a threaded, lower cylindrical segment 82 that is attached to substrate 6. A threaded, upper cylindrical segment 84 is screwed into lower cylindrical segment 82. Gap 7 (not shown) is disposed in-between lower cylindrical segment 82 and upper cylindrical segment 84. An access passageway 86 is disposed in the upper exterior surface 29 of upper cylindrical segment 84. A horizontal aperture 20 is disposed on the side of upper cylindrical segment 84 for inserting a sensor probe (not shown). The upper exterior surface 29 of upper cylindrical segment 84 and/or exterior side walls can have an optical finish chosen from a black (high emissivity) coating, a highly polished (low emissivity) surface, or a low emissivity coating, or combinations thereof.

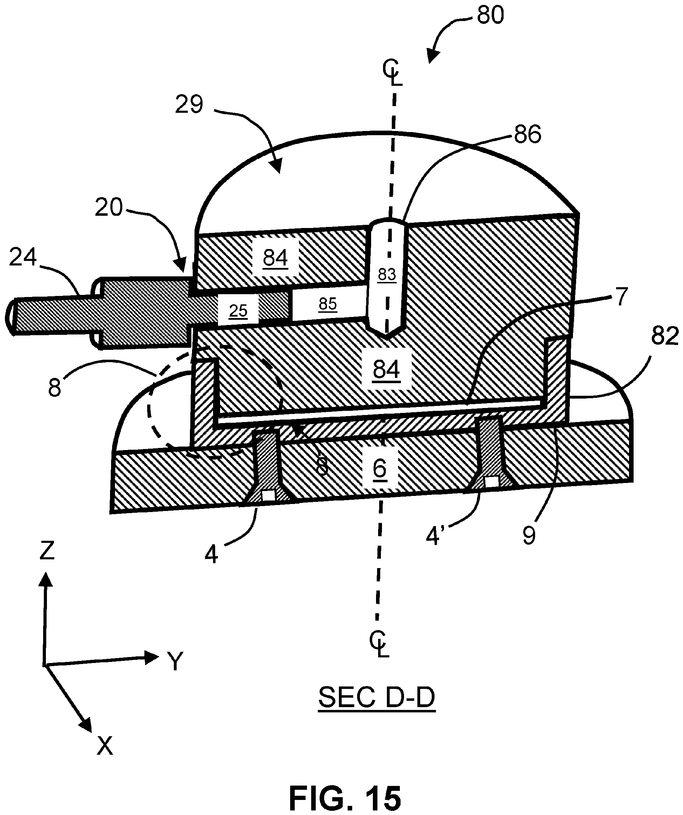

FIG. 15 shows a schematic, perspective, cross-section view (Section D-D) of the fourth example of a thermally-isolated, cylindrical sensor mount 80 attached to substrate 6, according to the present disclosure. Cylindrical sensor mount 80 has two levels and comprises a lower cylindrical segment 82 that is threaded; and an upper cylindrical segment 84 that is also threaded. The upper cylindrical segment 84 is screwed into lower cylindrical segment 84, with a gap 7 disposed in-between the upper cylindrical segment 84 and the lower cylindrical segment 82.

Referring still to FIG. 15, upper cylindrical segment 84 further comprises a horizontal first passageway 85 that is connected to side horizontal aperture 20 operable to hold sensor probe 24. Sensor probe 24 has a distal shaft 25 that can be threaded. Horizontal first passageway 85 can also be threaded. In this case, sensor probe shaft 25 can be screwed into threaded horizontal first passageway 85. Cylindrical sensor mount 80 has a second, vertical cylindrical passageway 83 that intersects horizontal first passageway 85. At cryogenic temperatures, the thickness of gap 7 can be quite small (e.g., < 0.001 inches) in order to prevent "cryopumping" across gap 7 (which undesirably increases heat transfer across gap 7, under cryogenic conditions). The bottom surface 9 of lower segment 82 can be artificially roughened to increase the gap thermal resistance across the joint between lower segment 82 and substrate 6. Lower cylindrical segment 84 can be attached to substrate 6 with screws 4, 4', etc., or other attachment methods, including, for example, adhesives. The upper exterior surface 29 of upper cylindrical segment 84 and/or the exterior side walls can have an optical finish chosen from a black (high emissivity) coating (for extremely hot substrates), a highly polished (low emissivity) surface, or a low emissivity coating (i.e., for cryogenic substrates), or combinations thereof. This nested, threaded, cylindrical assembly results in a strong and compact thermally-isolated mount 80.

In some examples, the total number of threaded, nested, cylindrical segments of a cylindrical sensor mount can be different than four. For example, the number of threaded cylindrical segments can be 2, 3, 4, 5, 6, 7 or 8 segments, depending on how much thermal isolation is needed.

In some examples, the exterior side walls and/or the top exterior surface of a sensor mount can have an optical finish, such as a black (high emissivity) coating, a highly polished surface, or a low-emissivity coating, or combinations thereof.

In some examples, the various segments that make up prismatic sensor mounts 10 or 60, or cylindrical sensor mounts 32 or 80 can be made of steel, porous steel, or other low thermal conductivity material, such as a ceramic, carbon fiber composite, or a polymeric material, or combinations thereof. The individual segments can be manufactured by using wire EDM (Electrode Discharge Machining), lathe turning, 3-D printing, or other well-known manufacturing techniques.

In some examples, the exterior dimensions of the interlocking segments can be the same or different. For example, for a prismatic sensor mount, the width and length of the prismatic segments can be different from each other. In another example, for a cylindrical mount, the diameter of the cylindrical segments can be different from each other.

Note that prismatic sensor mount 60 (as illustrated in FIGS. 12 and 13) is identical to the prismatic sensor mount 10 (as illustrated in FIG. 3), with the exception being that the middle segment 14 and the top segment 18 (from sensor mount 10) have been removed in FIGS. 12 and 13. The same relationship holds true for FIGS. 14 and 15.
Also disclosed herein are the following numbered clauses:
Clause 1. A thermally-isolated sensor mount, comprising: at least two nested, interlocking segments, comprising: a lower segment; an upper segment disposed above, and attached to, the lower segment with an interlocking joint; an upper exterior surface disposed on the upper segment, and wherein the upper and lower segments define a gap disposed therebetween.
Clause 2. The thermally-isolated sensor mount of clause 1, wherein the upper segment comprises a first passageway operable to hold a sensor probe.
Clause 3. The thermally-isolated sensor mount of clause 2, further comprising: a vertical or near-vertical access passageway disposed at least partially through the upper segment; and wherein the first passageway is horizontal and intersects the vertical or near-vertical access passageway.
Clause 4. The thermally-isolated sensor mount of clause 2 or 3, further comprising a sensor probe disposed in the first passageway.
Clause 5. The thermally-isolated sensor mount of clause 4, wherein the sensor probe has an integral shaft that is threaded; wherein the first passageway is threaded; and wherein the integral shaft is screwed into the threaded first passageway.
Clause 6. The thermally-isolated sensor mount of any one of clauses 1-5, wherein the lower segment and the upper segment have a prismatic shape; and wherein the sensor mount comprises a pair of dovetail joints that slidingly join the lower segment to the upper segment.
Clause 7. The thermally-isolated sensor mount of any one of clauses 1-5, wherein the lower segment has a cylindrical shape and is threaded; wherein the upper segment has a cylindrical shape and is threaded; wherein the upper segment is screwed into the lower segment.
Clause 8. The thermally-isolated sensor mount of any one of clauses 1-5, wherein the thermally-isolated sensor mount comprises four interlocking prismatic segments.
Clause 9. The thermally-isolated sensor mount of any one of clauses 1-5, wherein the thermally-isolated sensor mount comprises four interlocking cylindrical segments.
Clause 10. The thermally-isolated sensor mount of any one of clauses 1-9, wherein the upper exterior surface comprises an optical finish chosen from a black (high emissivity) coating, a highly polished (low emissivity) surface, or a low emissivity coating, or combinations thereof.
Clause 11. The thermally-isolated sensor mount of any one of clauses 1-9, wherein the upper exterior surface comprises an optical finish chosen from a black high emissivity coating, a highly polished low emissivity surface, or a low emissivity coating, or combinations thereof.
Clause 12. The thermally-isolated sensor mount of any one of clauses 1-9, wherein the upper exterior surface comprises an optical finish chosen from a black coating, a highly polished surface, or a low emissivity coating, or combinations thereof.
Clause 13. The thermally-isolated sensor mount of any preceding clause, wherein the gap has a thickness that is less than about 0.001".
Clause 14. A thermally-isolated sensor mount, comprising: at least two interlocking cylindrical segments, comprising: a lower segment that has a cylindrical shape and is threaded; an upper segment that has a cylindrical shape and is threaded; a first passageway disposed in the upper segment operable to hold a sensor probe; an upper exterior surface of the upper segment; and wherein the lower and upper segments define a gap disposed therebetween; and wherein the upper segment is screwed into the lower segment.
Clause 15. The thermally-isolated sensor mount of clause 14, wherein the upper exterior surface comprises an optical finish chosen from a black (high emissivity) coating, a highly polished (low emissivity) surface, or a low emissivity coating, or combinations thereof.
Clause 16. The thermally-isolated sensor mount of clause 14, wherein the upper exterior surface comprises an optical finish chosen from a black high emissivity coating, a highly polished low emissivity surface, or a low emissivity coating, or combinations thereof.
Clause 17. The thermally-isolated sensor mount of clause 14, wherein the upper exterior surface comprises an optical finish chosen from a black coating, a highly polished surface, or a low emissivity coating, or combinations thereof.
Clause 18. The thermally-isolated sensor mount of any one of clauses 14-17, further comprising a sensor probe disposed in the first passageway.
Clause 19. A thermally-isolated sensor mount, comprising: at least four interlocking cylindrical segments, comprising: a bottom segment that has a cylindrical shape and is threaded; a middle segment that has a cylindrical shape and is threaded; an upper segment that has a cylindrical shape and is threaded; a top segment that has a cylindrical shape and is threaded; a first passageway in the upper segment operable to hold a sensor probe; wherein the bottom and middle segments define a first gap disposed therebetween; wherein the middle and upper segments define a second gap disposed therebetween; and an upper exterior surface of the top segment; wherein the middle segment is screwed into the bottom segment; wherein the upper segment is screwed into the middle segment; and wherein the top segment is screwed into the upper segment.
Clause 20. The thermally-isolated sensor mount of clause 19, wherein the upper exterior surface of the top segment comprises an optical finish chosen from a black (high emissivity) coating, a highly polished (low emissivity) surface, or a low emissivity coating, or combinations thereof.
Clause 21. The thermally-isolated sensor mount of clause 19, wherein the upper exterior surface of the top segment comprises an optical finish chosen from a black high emissivity coating, a highly polished low emissivity surface, or a low emissivity coating, or combinations thereof.
Clause 22. The thermally-isolated sensor mount of clause 19, wherein the upper exterior surface of the top segment comprises an optical finish chosen from a black coating, a highly polished surface, or a low emissivity coating, or combinations thereof.
Clause 23. The thermally-isolated sensor mount of any one of clauses 19-22, further comprising a sensor probe disposed in the first passageway.
Clause 24. The thermally-isolated sensor mount of any one of clauses 19-23, wherein the first gap has a thickness that is less than about 0.001"; and wherein the second gap has a thickness that is less than about 0.001".
Clause 25. The thermally-isolated sensor mount of any one of clauses 19-24, further comprising: a vertical or near-vertical access passageway disposed at least partially through the upper segment and disposed completely through the top segment; and wherein the first passageway is horizontal and intersects the vertical or near-vertical access passageway.
Clause 26. The thermally-isolated sensor mount of any one of clauses 19-25, further comprising: a sensor probe disposed in the first passageway; wherein the sensor probe has an integral shaft that is threaded; wherein the first passageway is threaded; and wherein the integral shaft is screwed into the threaded first passageway.

## Claims

1. A thermally-isolated sensor mount (60), comprising:
at least two nested, interlocking segments (62, 64), comprising:
a lower segment (62);
an upper segment (64), disposed above, and attached to, the lower segment (62) with an interlocking joint (8, 8');
an upper exterior surface (29) disposed on the upper segment (64), and
wherein the upper and lower segments define a gap (7) disposed therebetween.

2. The thermally-isolated sensor mount (60) of claim 1, wherein the upper segment (64) comprises a first passageway (70) operable to hold a sensor probe (24); and optionally, the sensor mount (60) further comprising:
a vertical or near-vertical access passageway (72) disposed at least partially through the upper segment (64); and
wherein the first passageway (70) is horizontal and intersects the vertical or near-vertical access passageway (72).

3. The thermally-isolated sensor mount (60) of claim 2, further comprising a sensor probe (24) disposed in the first passageway (70).

4. The thermally-isolated sensor mount (60) of claim 3, wherein the sensor probe (24) has an integral shaft (25) that is threaded; wherein the first passageway (70) is threaded; and wherein the integral shaft (25) is screwed into the threaded first passageway (70).

5. The thermally-isolated sensor mount (60) of any one of claims 1-4, wherein:
the lower segment (62) and the upper segment (64) have a prismatic shape; and
the sensor mount (60) comprises a pair of dovetail joints (8, 8') that slidingly join the lower segment (62) to the upper segment (64).

6. The thermally-isolated sensor mount (80) of any one of claims 1-4,
wherein the lower segment (82) has a cylindrical shape and is threaded;
wherein the upper segment (84) has a cylindrical shape and is threaded;
wherein the upper segment (84) is screwed into the lower segment (82).

7. The thermally-isolated sensor mount (10) of any one of claims 1-4, wherein the thermally-isolated sensor mount (10) comprises four interlocking prismatic segments (12, 14, 16, 18) or four interlocking cylindrical segments (34, 36, 38, 40).

8. The thermally-isolated sensor mount (60) of any preceding claim, wherein: the upper exterior surface (29) comprises an optical finish chosen from a black high emissivity coating, a highly polished low emissivity surface, or a low emissivity coating, or combinations thereof; and/or the gap (7) has a thickness that is less than about 0.001".

9. A thermally-isolated sensor mount (80), comprising:
at least two interlocking cylindrical segments (82, 84), comprising:
a lower segment (82) that has a cylindrical shape and is threaded;
an upper segment (84) that has a cylindrical shape and is threaded;
a first passageway (85) disposed in the upper segment (84) operable to hold a sensor probe (24);
an upper exterior surface (29) of the upper segment (84); and
wherein the lower and upper segments (82, 84) define a gap (7) disposed therebetween; and
wherein the upper segment (84) is screwed into the lower segment (82).

10. The thermally-isolated sensor mount (80) of claim 9, wherein:
the upper exterior surface (29) comprises an optical finish chosen from a black high emissivity coating, a highly polished low emissivity surface, or a low emissivity coating, or combinations thereof; and/or
wherein the sensor mount (80) further comprises a sensor probe (24) disposed in the first passageway.

11. A thermally-isolated sensor mount (32), comprising:
at least four interlocking cylindrical segments (34, 36, 38, 40), comprising:
a bottom segment (34) that has a cylindrical shape and is threaded;
a middle segment (36) that has a cylindrical shape and is threaded;
an upper segment (38) that has a cylindrical shape and is threaded;
a top segment (40) that has a cylindrical shape and is threaded;
a first passageway (45) in the upper segment (38) operable to hold a sensor probe (24);
wherein the bottom and middle segments (34, 36) define a first gap (7) disposed therebetween;
wherein the middle (36, 38) and upper segments define a second gap (7') disposed therebetween; and
an upper exterior surface (29) of the top segment (40);
wherein the middle segment (36) is screwed into the bottom segment (34);
wherein the upper segment (38) is screwed into the middle segment (36); and
wherein the top segment (40) is screwed into the upper segment (38).

12. The thermally-isolated sensor mount (32) of claim 11, wherein the upper exterior surface of the top segment comprises an optical finish chosen from a black high emissivity coating, a highly polished low emissivity surface, or a low emissivity coating, or combinations thereof.

13. The thermally-isolated sensor mount (32) of claim 11 or 12, further comprising a sensor probe (24) disposed in the first passageway (45).

14. The thermally-isolated sensor mount (32) of any one of claims 11-13, wherein:
the first gap (7) has a thickness that is less than about 0.001" and wherein the second gap (7') has a thickness that is less than about 0.001"; and/or
wherein the sensor mount (32) further comprises:
a vertical or near-vertical access passageway (43) disposed at least partially through the upper segment (38), and disposed completely through the top segment (40); and
wherein the first passageway (45) is horizontal and intersects the vertical or near-vertical access passageway (43).

15. The thermally-isolated sensor mount (32) of claim 13 or claim 14 when dependent on claim 13,
wherein the sensor probe (24) has an integral shaft (25) that is threaded;
wherein the first passageway (45) is threaded; and
wherein the integral shaft (25) is screwed into the threaded first passageway (45).
